# FASCICULE DE BREVET EUROPEEN

(11) **EP 2 368 032 B1**
(45) Date de publication et mention de la délivrance du brevet: **02.07.2014**
(21) Numéro de dépôt: 09795490.3
(22) Date de dépôt: 23.11.2009
(51) Int. Cl.: F02K 1/76

(54) **INVERSEUR DE POUSSEE POUR NACELLE DE TURBOREACTEUR A DOUBLE FLUX**
SCHUBUMKEHRER FÜR EINE MANTELSTROMTRIEBWERKSGONDEL
THRUST REVERSER FOR A TURBOFAN ENGINE NACELLE

(30) Priorité: 26.11.2008 FR 0806649
(43) Date de publication de la demande: 28.09.2011
(73) Titulaire: Aircelle, 76700 Gonfreville l'Orcher (FR)
(72) Inventeur: VAUCHEL, Guy, Bernard, F-76700 Harfleur (FR); CARUEL, Pierre, F-76600 Le Havre (FR)
(74) Mandataire: Verriest, Philippe
(86) Numéro de dépôt international: PCT/FR2009/052253
(87) Numéro de publication internationale: WO 2010/061107

(56) Documents cités:
- US-A- 3 599 432
- US-A- 5 228 641
- US-B1- 7 484 356

## Description

L'invention concerne un inverseur de poussée pour nacelle de turboréacteur à double flux.

Un avion est mû par plusieurs turboréacteurs logés chacun dans une nacelle abritant également un ensemble de dispositifs d'actionnement annexes liés à son fonctionnement et assurant diverses fonctions lorsque le turboréacteur est en fonctionnement ou à l'arrêt. Ces dispositifs d'actionnement annexes comprennent notamment un système mécanique d'actionnement d'inverseurs de poussée.

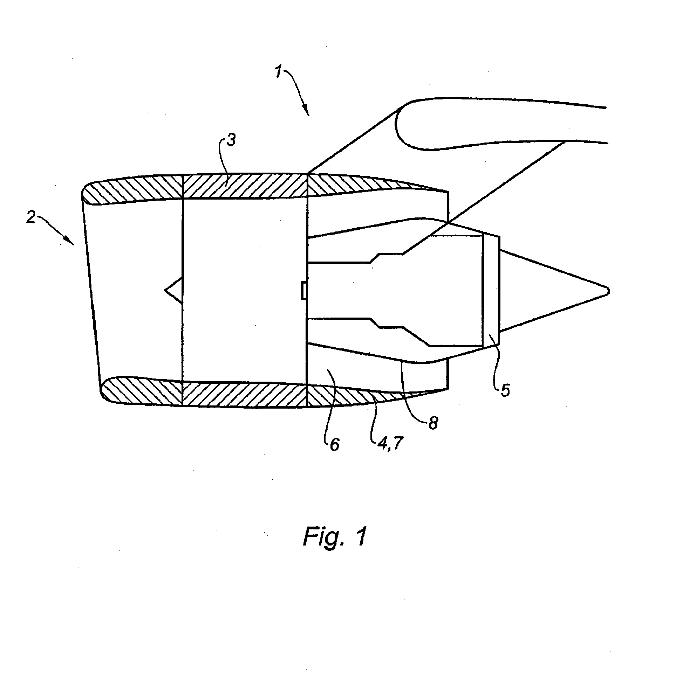

Comme cela est illustré à la figure 1, une nacelle 1 présente généralement une structure tubulaire comprenant une entrée d'air 2 en amont du turboréacteur, une section médiane 3 destinée à entourer une soufflante du turboréacteur, une section aval 4 abritant des moyens d'inversion de poussée et destinée à entourer la chambre de combustion du turboréacteur, et est généralement terminée par une tuyère d'éjection 5 dont la sortie est située en aval du turboréacteur. Les nacelles modernes sont destinés à abriter un turboréacteur double flux apte à générer par l'intermédiaire des aubes internes du corps du moteur un flux d'air chaud (également appelé flux primaire) issu de la chambre de combustion du turboréacteur, et par l'intermédiaire des aubes de la soufflante, un flux d'air froid (flux secondaire) qui circule à l'extérieur du turboréacteur à travers un canal annulaire 6, également appelé veine, formé entre un carénage du turboréacteur 7 et une structure interne 8 de la nacelle. Les deux flux d'air sont éjectés du turboréacteur par l'arrière de la nacelle 1.

Le rôle d'un inverseur de poussée est, lors de l'atterrissage d'un avion, d'améliorer la capacité de freinage de celui-ci en redirigeant vers l'avant au moins une partie de la poussée générée par le turboréacteur. Dans cette phase, l'inverseur obstrue la veine du flux froid et dirige ce dernier vers l'avant de la nacelle, générant de ce fait une contre-poussée qui vient s'ajouter au freinage des roues de l'avion.

Les moyens mis en oeuvre pour réaliser cette réorientation du flux froid varient suivant le type d'inverseur.

Cependant, dans tous les cas, la structure d'un inverseur comprend des éléments mobiles déplaçables entre, d'une part, une position déployée dans laquelle ils ouvrent dans la nacelle un passage destiné au flux dévié, et d'autre part, une position d'escamotage dans laquelle ils ferment ce passage. Ces capots peuvent remplir une fonction de déviation ou simplement d'activation d'autres moyens de déviation.

Le document US 5 228 641 décrit un inverseur de poussée dont le système d'actionnement est situé hors du flux d'air inversé de manière à assurer une poussée inversée maximale. Le turboréacteur comprend une nacelle, un cadre mobile, une partie centrale du turboréacteur. Lorsque le cadre est translaté grâce à de moyens de translation tels que des vérins hydrauliques ou leurs équivalents, une pluralité de grilles sont découvertes. Chaque grille comporte une pluralité de déflecteurs. De plus, des éléments, dans lesquels sont présents les moyens de translation sont disposés entre les grilles pour assurer la translation du cadre.

Le document US 3 599 432 décrit un inverseur de poussée qui a pour caractéristique de comprendre un diaphragme. Le diaphragme gonflé permet la circulation de l'air entre des grilles, ce qui réoriente le flux d'air. Les grilles sont fixées à l'extrémité arrière du capot et s'étendent dans une zone annulaire par rapport à celui-ci.

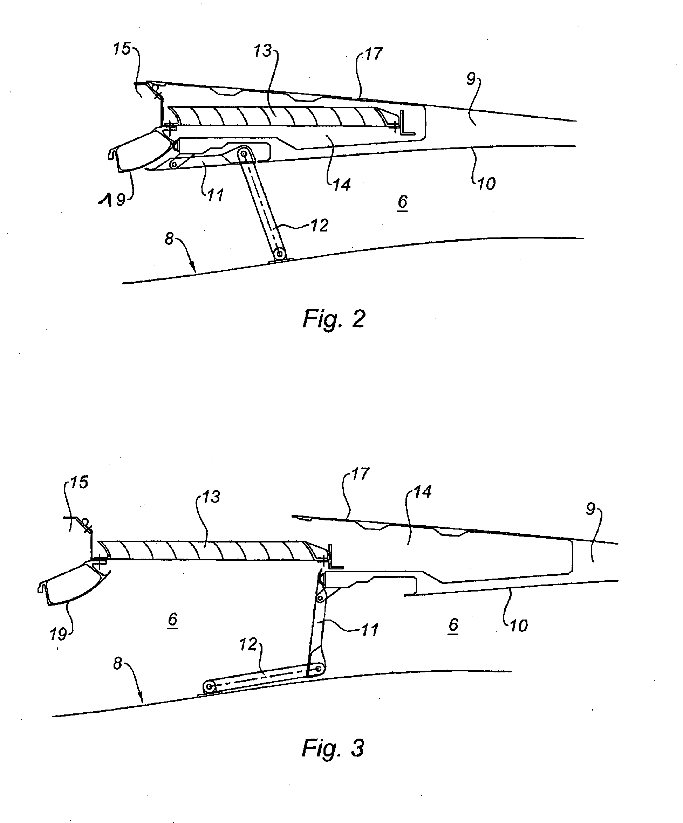

Un inverseur de l'art antérieur est illustré aux figures 2 et 3. Cet inverseur est du type inverseur à grilles ou inverseur à cascade.

Ce type d'inverseur comporte au moins un capot mobile 9 par rapport à une structure fixe 15, ledit capot 9 présentant une paroi externe 17 et une paroi interne 10 destinée à délimiter, dans une position de jet direct du turboréacteur (figure 2), une paroi externe du canal annulaire 6 dans lequel s'écoule le flux secondaire. L'inverseur comporte en outre au moins un volet 11 monté de manière articulée sur le capot mobile 9 et actionné par au moins une bielle 12 lors du déplacement du capot mobile vers aval, de sorte que, dans une position d'inversion de poussée (figure 3), chaque volet 11 comporte une zone s'étendant dans le canal annulaire 6 de manière à dévier au moins une partie du flux secondaire hors dudit canal annulaire 6.

Dans le cas de ce type d'inverseur, la réorientation du flux secondaire est effectuée par des grilles de déviation 13, le capot mobile 9 n'ayant qu'une simple fonction de coulissement visant à découvrir ou recouvrir ces grilles, la translation du capot mobile 9 s'effectuant selon un axe longitudinal sensiblement parallèle à l'axe de la nacelle 1.

Un logement 14 est ménagé dans le capot mobile 9 et permet de loger les grilles 13 lorsque l'inverseur n'est pas actionné, c'est-à-dire en position de jet direct, comme cela est représenté à la figure 2.

Les grilles 13 sont disposées de manière adjacente les unes par rapport aux autres, dans une zone annulaire entourant le canal annulaire 6, les grilles 13 étant disposées bord à bord de manière à ce qu'aucun intervalle ne soit ménagé entre celles-ci. De cette manière, l'ensemble du flux secondaire dévié par les volets 11 passe au travers des grilles 13. Les moyens de déplacement et de guidage du capot mobile (non représentés) sont disposés sous les grilles 13.

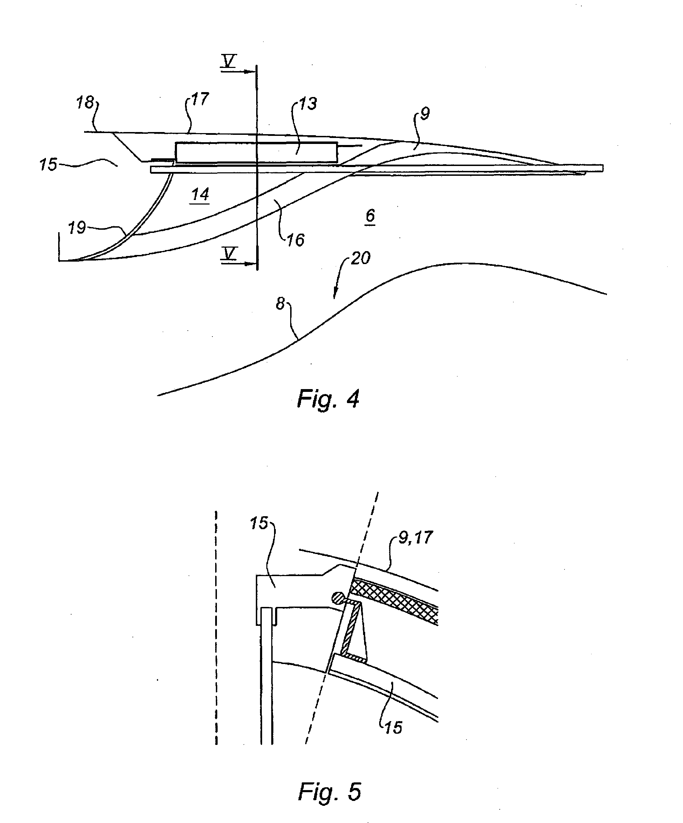

Un autre inverseur de ce type est représenté schématiquement à la figure 4. Sur cette figure, les éléments présentant la même fonction que précédemment ont été désignés par les mêmes références.

Cet inverseur ne présente pas de volet de déviation 11. Le capot 9 est monté de manière mobile par rapport à une partie fixe, appelée cadre avant 15. Le capot 9 comporte une paroi interne 10, délimitant une paroi périphérique du canal annulaire 6 et une paroi externe 17 disposée dans le prolongement d'une paroi externe 18 du cadre avant 15.

Le cadre avant 15 comporte un bord de déviation 19 arrondi s'étendant depuis la périphérie du canal annulaire 6 jusqu'à l'extrémité amont des grilles 13.

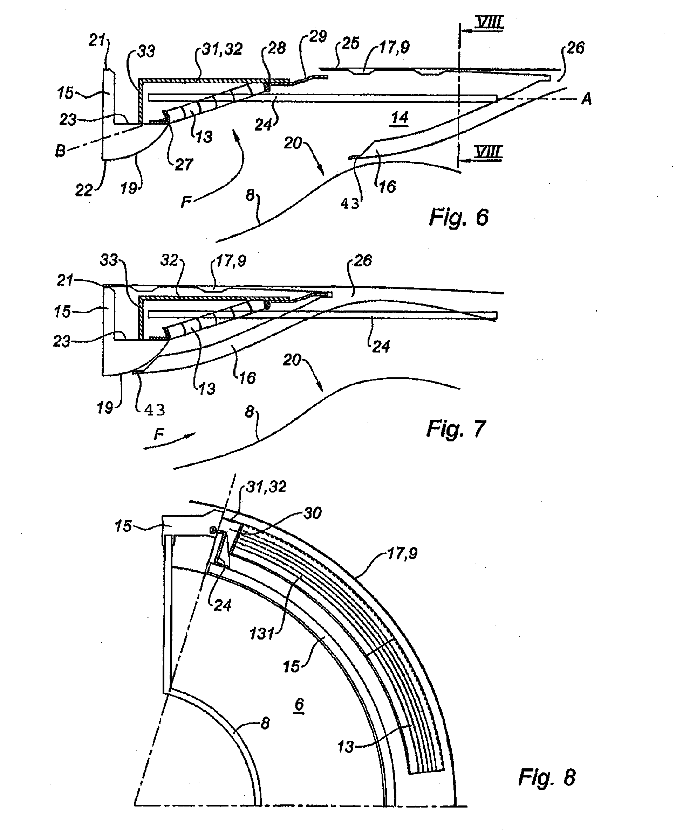

La nacelle comporte une structure interne 8 délimitant la paroi interne du canal annulaire 6 et présentant une zone d'élargissement 20 du diamètre de ladite structure interne 8. Le canal annulaire forme alors une veine en S. L'extrémité libre 43 de la paroi interne 16 du capot mobile 9 est disposée dans le prolongement ou à proximité de ladite zone d'élargissement 20, en position d'inversion de poussée (figure 6). De cette manière, le flux secondaire F s'écoulant dans le canal annulaire 6, de l'amont vers l'aval, est bloqué par la paroi interne 16 du capot, puis s'échappe vers l'extérieur, au travers des grilles de déviation 13.

Pour des raisons d'efficacité, le bord de déviation 19 doit présenter un rayon de courbure important. En outre, afin de pouvoir augmenter au maximum la longueur des grilles 13 de manière à dévier au maximum le flux secondaire F vers l'amont, il est nécessaire de disposer les grilles 13 le plus proche possible de la paroi externe 17 du capot 9. La longueur limitée du logement du capot mobile 9 et le rayon important du bord de déviation 19 ont pour effet de réduire la longueur des grilles 13.

Afin de pallier cet inconvénient, il est connu de disposer obliquement les grilles. L'ensemble des grilles s'étend alors à la façon d'un tronc de cône, autour du canal annulaire.

Le document EP 1 229 237 décrit un tel inverseur, dans lequel les grilles sont disposées obliquement. Dans ce cas toutefois, il n'est plus possible de disposer les moyens de déplacement et de guidage du capot mobile sous les grilles. Les grilles sont alors écartées les unes des autres de manière à ce que les moyens de déplacement et de guidage précités soient disposés entre deux grilles adjacentes.

Dans ce cas, une partie du flux secondaire peut s'échapper dans l'intervalle ménagé entre les grilles, ce qui a pour effet de diminuer la déviation du flux secondaire et donc l'efficacité de l'inverseur.

L'invention vise à remédier à ces inconvénients en proposant un inverseur permettant d'améliorer la déviation du flux secondaire vers l'amont.

A cet effet, l'invention concerne un inverseur de poussée pour nacelle de turboréacteur à double flux comprenant une partie fixe en aval de laquelle est monté au moins un capot mobile entre une position de jet direct dans laquelle le capot est situé dans le prolongement de la partie fixe, et une position d'inversion de poussée dans laquelle le capot mobile est écarté de la partie fixe de manière à délimiter une ouverture de passage d'un flux secondaire, des moyens de déviation du flux secondaire au travers de l'ouverture de passage, des moyens d'actionnement et de guidage du capot mobile par rapport à la partie fixe, au moins une première et une seconde grilles de déviation adjacentes, orientées obliquement par rapport à l'axe de déplacement du capot mobile, disposées en regard de l'ouverture de passage de manière à ce que le flux secondaire dévié passe, au moins en partie, au travers des première et seconde grilles afin d'accentuer la déviation dudit flux secondaire vers l'amont, lesdits moyens d'actionnement et de guidage du capot mobile étant disposés entre les première et seconde grilles, caractérisé en ce qu'une paroi de recouvrement relie lesdites première et seconde grilles, en contournant lesdits moyens d'actionnement et de guidage.

La paroi de recouvrement permet ainsi de recouvrir l'intervalle entre deux grilles adjacentes écartées l'une de l'autre, sans interférer avec les moyens d'actionnement et de guidage. Le flux secondaire est donc alors nécessairement dirigé vers les grilles de déviation, ce qui a pour effet d'augmenter l'efficacité de l'inverseur.

Selon une caractéristique de l'invention, la paroi de recouvrement est constituée, au moins en partie, d'une grille de déviation additionnelle, agencée pour accentuer la déviation dudit flux secondaire vers l'amont.

De cette manière, la surface de grille est encore augmentée, ce qui favorise d'autant la déviation du flux vers l'amont.

Avantageusement, l'inverseur comporte une paroi externe, une paroi interne destinée à délimiter une paroi périphérique d'un canal annulaire dans lequel s'écoule le flux secondaire, les première et seconde grilles divergeant vers l'extérieur, de l'amont vers l'aval, la grille additionnelle formant un angle avec lesdites première et seconde grilles, de manière à former un décrochement externe par rapport à celles-ci.

Les moyens de déplacement et de guidage peuvent ainsi être logés dans le décrochement.

Selon une possibilité de l'invention, les grilles adjacentes forment un angle inférieur ou égal à 30 ° avec l'axe de déplacement du capot mobile.

Préférentiellement, la grille additionnelle est reliée à chacune des première et seconde grilles adjacentes par l'intermédiaire d'une paroi de liaison.

Selon une caractéristique de l'invention, la paroi de liaison comporte une première face reliée à l'une des première et seconde grilles, respectivement à la grille additionnelle, et une seconde face équipée de moyens de déflection s'étendant depuis ladite seconde face jusqu'au niveau de la grille additionnelle, respectivement jusqu'au niveau de la première ou seconde grille.

Les moyens de déflection permettent encore d'améliorer la déviation du flux secondaire vers l'amont.

Avantageusement, le capot mobile comporte au moins un logement ouvert vers l'amont, dans lequel sont logées les première et seconde grilles, en position de jet direct de l'inverseur.

L'invention concerne en outre une nacelle de turboréacteur à double flux comportant un inverseur de poussée selon l'invention.

Avantageusement, la nacelle comporte une structure interne, délimitant la paroi interne du canal annulaire et présentant une zone d'élargissement, la paroi interne du capot présentant une extrémité libre disposée dans le prolongement ou à proximité de ladite zone d'élargissement, en position d'inversion de poussée.

L'invention concerne de plus un aéronef comportant au moins une nacelle selon l'invention.

De toute façon, l'invention sera bien comprise à l'aide de la description qui suit en référence au dessin schématique annexé représentant, à titre d'exemples, plusieurs formes de réalisation de cet inverseur de poussée.
Figure 1 est une vue schématique d'une nacelle en coupe longitudinale,
Figures 2 et 3 sont des vues schématiques agrandies, en coupe longitudinale, d'un inverseur de poussée de l'art antérieur, respectivement en position de jet direct et en position d'inversion de poussée,
Figure 4 est vue schématique, en coupe longitudinale, d'un autre inverseur de poussée de l'art antérieur,
Figure 5 est une vue en coupe partielle selon la ligne V-V, d'une partie de l'inverseur de la figure 2,
Figure 6 est une vue schématique, en coupe longitudinale, d'une première forme de réalisation de l'invention, en position d'inversion de poussée,
Figure 7 est une vue correspondant à la figure 6, en position de jet direct,
Figure 8 est une vue en coupe partielle selon la ligne VIII-VIII, d'une partie de l'inverseur de la figure 6,
Figure 9 est une vue schématique, en coupe longitudinale, d'une deuxième forme de réalisation de l'invention,
Figure 10 est vue en coupe partielle selon la ligne X-X, d'une partie de l'inverseur de la figure 9.
Figure 11 est une vue en perspective de deux grilles adjacentes reliées par une grille additionnelle ;
Figures 12 et 13 sont des vues en perspective, de dessus, de la première grille et d'une grille additionnelle, conformément à une troisième forme de réalisation ;
Figure 14 est une vue en perspective de la première grille.

Un inverseur de poussée selon une première forme de réalisation de l'invention est représenté aux figures 6 et 7.

Celui-ci équipe une nacelle 1 du type de celle exposée précédemment en référence à la figure 1.

L'inverseur comporte un cadre avant 15 ou structure fixe, fixé sur un carter de moteur du turboréacteur, un capot mobile 9, une paroi externe, un canal annulaire 6 à l'intérieur duquel circule un flux secondaire F, et une structure interne 8, présentant une zone élargie 20. Les positions amont et aval utilisées ci-après sont définies par rapport à la direction du flux secondaire F.

Le cadre avant 15 comporte une paroi externe 21 et une paroi interne 22, tournée du côté du canal annulaire 6 et présentant un bord de déviation 19 de forme générale arrondie. Le cadre avant 15 comporte en outre un épaulement 23, tourné vers l'extérieur.

Le capot 9 est monté en aval du cadre avant 15 et de manière mobile par rapport à celui-ci, entre une position de jet direct (figure 7) et une position d'inversion de poussée (figure 6). Le déplacement du capot mobile 9 est actionné à l'aide d'une pluralité de vérins 45, le guidage dudit capot 9 étant assuré par une pluralité de rails 24. Les vérins 45 et les rails 24 sont répartis sur la périphérie de la nacelle 1.

Le capot mobile 9 comporte une extrémité amont 25, tournée du côté du cadre avant 15, une extrémité aval, une paroi externe 17 disposée dans le prolongement de celle 21 du cadre avant 15 en position de jet direct (figure 7) et une paroi interne 16, délimitant également une partie du canal annulaire 6. Les parois interne et externe 16, 17 se rejoignent dans une zone médiane 26 du capot mobile 9 et délimitent entre elles, en amont de ladite zone médiane 26, un logement 14 central débouchant vers l'amont.

Le logement 14 est destiné à accueillir des grilles de déviation 13 du flux secondaire en position de jet direct, comme cela représenté à la figure 7.

Lesdites grilles 13 sont disposées dans une zone annulaire, de manière adjacente les unes par rapport aux autres. Le terme adjacent ne signifie pas nécessairement que les grilles soient disposées bord à bord, comme cela est expliqué ci-après.

Chaque grille 13 s'étend obliquement par rapport à l'axe A de déplacement du capot mobile 9, entre une première extrémité 27 fixée sur le cadre avant 15 et une seconde extrémité 28 fixée sur une ferrure 29, fixe par rapport à des structures longitudinales supérieure et inférieure, non référencées au dessin, elles-mêmes fixes par rapport au cadre avant 15. Lesdites grilles 13 sont donc fixes par rapport au cadre avant 15.

Comme cela apparaît à la figure 6, chaque grille 13 se présente sous la forme d'une portion tronconique c'est-à-dire que les première et seconde extrémités 27, 28 de chaque grille 13 présentent une forme d'arc de cercle, chaque grille 13 s'étendant en outre selon une génératrice B oblique, formant un angle avec l'axe de déplacement A du capot mobile 9.

Les grilles 13 sont inclinées de l'intérieur vers l'extérieur, de l'amont vers l'aval.

On rappelle que, comme vu précédemment, l'axe de déplacement A du capot mobile 9 est parallèle à l'axe général de la nacelle 1.

Compte tenu de l'agencement oblique des grilles 13, il est nécessaire d'écarter certaines des grilles 13 les unes par rapport aux autres, de manière à ménager un intervalle 30 permettant le passage des vérins 45 et/ou des rails 24, en fonction de la position des grilles 13. Certaines grilles 13 peuvent être ainsi accolées les unes aux autres, d'autres étant écartées les unes par rapport aux autres.

Dans les zones où deux grilles adjacentes 131, 132 sont écartées l'une de l'autre, une paroi de recouvrement pleine 31 recouvre l'intervalle 30 et contourne le rail 24 ou le vérin 45 correspondant.

Plus particulièrement, la paroi 31 relie les deux grilles adjacentes 131, 132 correspondantes. Ladite paroi 31 présente une zone périphérique 32 en forme générale de portion de cylindre, située radialement au niveau de la seconde extrémité 28 desdites grilles 131, 132.

La paroi de liaison 31 s'étend ainsi d'une grille adjacente 131 à l'autre 132 et d'une extrémité 27 à l'autre 28 des grilles 131, 132, suivant une génératrice parallèle à l'axe A de déplacement du capot 9. La paroi de recouvrement 31 comporte en outre un fond amont 33 reliant la zone périphérique 31 au cadre avant 15.

De cette manière, on évite qu'une partie du flux secondaire F s'échappe au travers de l'intervalle 30, l'ensemble du flux secondaire F passant au travers des grilles 13.

En fonction des applications, il est possible de ménager des ouvertures de faibles dimensions dans ladite paroi de recouvrement 31, sans influence sensible sur l'efficacité de l'inverseur.

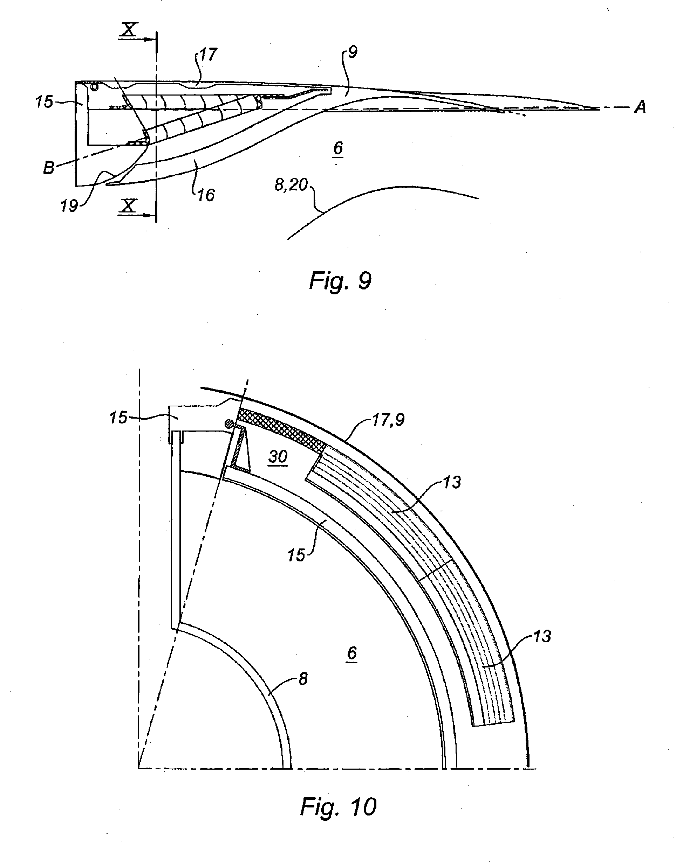

Dans une forme de réalisation représentée aux figures 9 à 11, la paroi de recouvrement 31 est constituée, au moins en partie, par une grille de déviation additionnelle 34 similaire aux grilles de déviation 13, présentant des ailettes ou aubes 35 inclinées vers l'amont.

Selon une première variante, ladite grille de déviation additionnelle présente une forme générale en portion de cylindre et s'étend suivant une génératrice parallèle à l'axe A. De la même manière que précédemment, ladite grille est située radialement au niveau ou à hauteur de la seconde extrémité 28 des grilles 131, 132.

Selon une seconde variante, représentée aux figures 9 à 11, la grille de déviation additionnelle 34 s'étend suivant une génératrice C formant un angle avec l'axe A, l'angle étant toutefois plus faible que l'angle d'inclinaison des grilles 131, 132. De la même manière que les grilles 13, la grille additionnelle 34 s'étend de l'intérieur vers l'extérieur et de l'amont vers l'aval.

En d'autres termes, la première variante correspond à la seconde variante avec un angle nul entre la génératrice C et l'axe A.

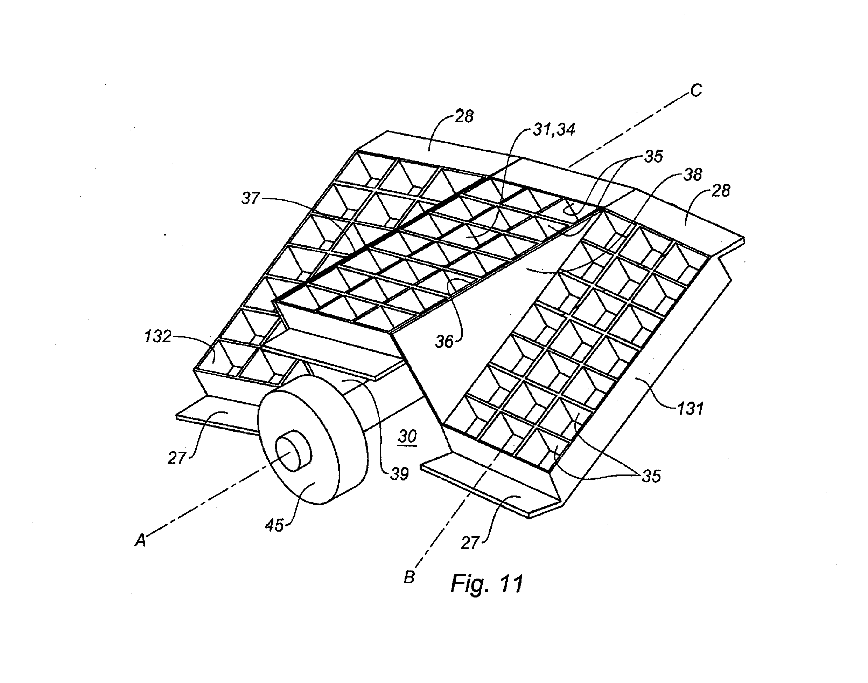

Quelle que soit la forme de réalisation, la paroi de recouvrement 31 forme ainsi un décrochement vers l'extérieur, par rapport aux grilles 131, 132, dans lequel les rails 24 ou les vérins 45 (figure 11) peuvent être logés.

Dans la forme de réalisation représentée à la figure 11, la grille additionnelle 34 comporte un premier et un second bords 36, 37 latéraux reliés respectivement aux bords correspondants de la première et seconde grilles adjacentes 131, 132, par l'intermédiaire respectivement d'une première et d'une seconde parois de liaison 38, 39 s'étendant radialement. Le vérin 45 est ainsi recouvert et logé dans le décrochement formé par la grille additionnelle 34 et les deux parois de liaison 38, 39.

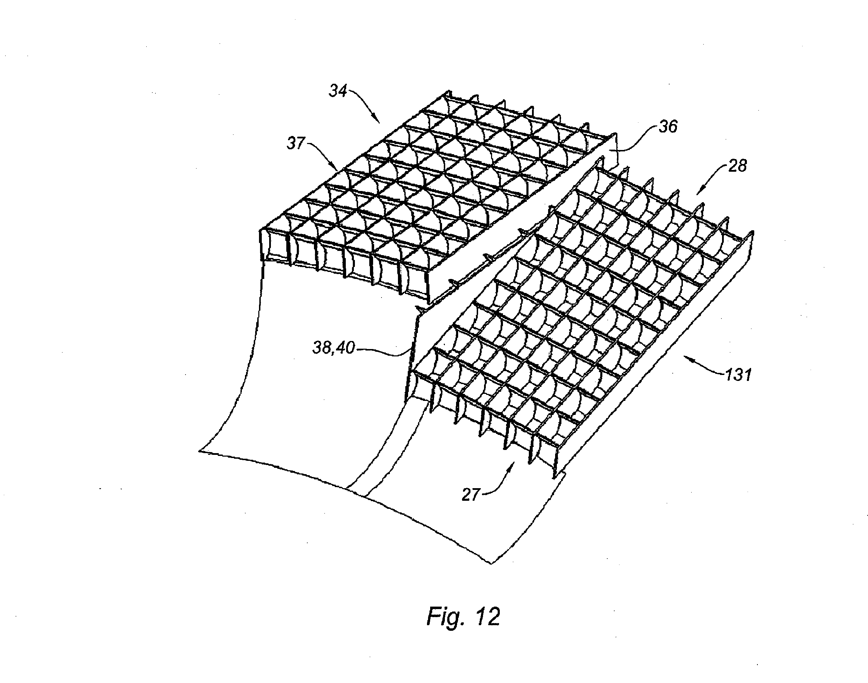

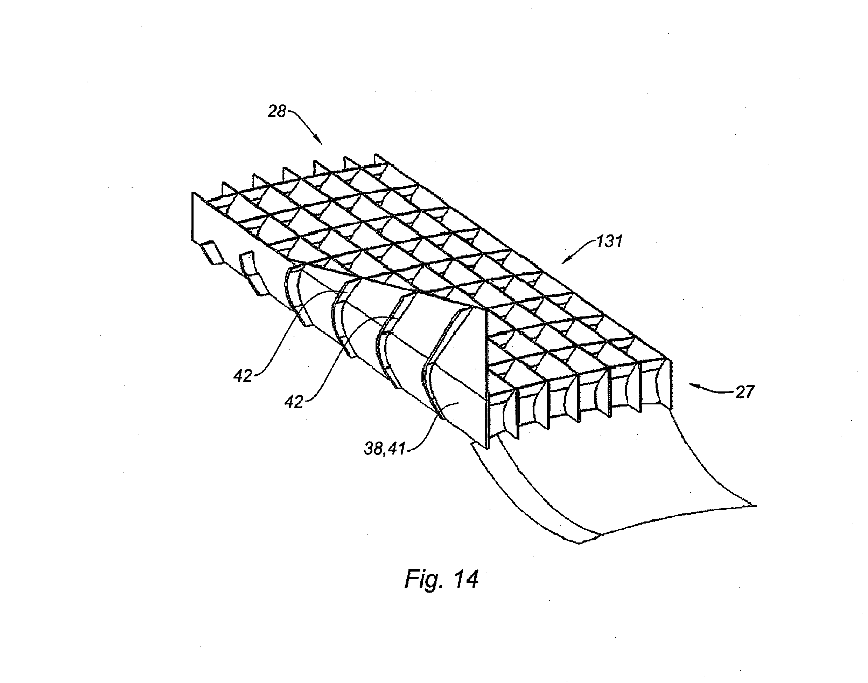

Suivant une autre forme de réalisation représentée aux figures 12 à 14, chaque paroi de liaison 38, 39, vient de moulage avec la grille correspondante 131, comporte une première face 40 située du côté de ladite grille 131, et une seconde face 41 équipée de moyens de déflection 42 s'étendant depuis ladite seconde face 41 jusqu'au niveau du bord latéral correspondant 36 de la grille additionnelle 34. Les moyens de déflection 42 sont formés par des ailettes courbes, orientées de manière à dévier vers l'amont le flux secondaire F passant entre la seconde face 41 de la paroi de liaison 38 et le bord correspondant 36 de la grille additionnelle 34.

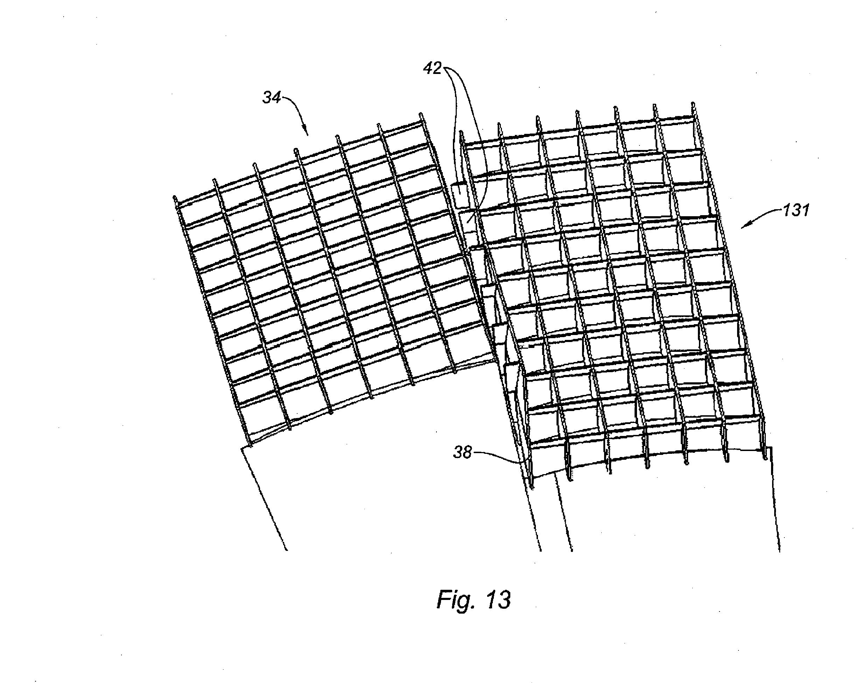

Bien que, aux figures 12 et 13, seule la première grille 131 et la première paroi de liaison 38 sont représentées, l'inverseur reste équipé d'une seconde paroi de liaison 39, similaire à la première, et permettant de relier la seconde grille 132 à la grille additionnelle 34.

Bien entendu, la paroi de liaison 38, 39 pourrait également venir de moulage avec la grille additionnelle 34 et s'étendre en direction de la grille correspondante 131, 132.

Comme il va de soi, l'invention ne se limite pas aux seules formes de réalisation de cet inverseur de poussée, décrites ci-dessus à titre d'exemples, mais elle embrasse au contraire toutes les variantes. C'est ainsi notamment que les moyens de déviation du flux pourraient comprendre un ou plusieurs volets, similaires à ceux illustrés aux figures 2 et 3.

## Revendications

1. Inverseur de poussée pour nacelle (1) de turboréacteur à double flux comprenant une partie fixe (15) en aval de laquelle est monté au moins un capot (9) mobile entre une position de jet direct dans laquelle le capot (9) est situé dans le prolongement de la partie fixe (15), et une position d'inversion de poussée dans laquelle le capot mobile (9) est écarté de la partie fixe (15) de manière à délimiter une ouverture de passage d'un flux secondaire (F), des moyens de déviation (16) du flux secondaire (F) au travers de l'ouverture de passage, des moyens d'actionnement (45) et de guidage (24) du capot mobile (9) par rapport à la partie fixe (15), au moins une première et une seconde grilles de déviation adjacentes (13, 131, 132), orientées obliquement (B) par rapport à l'axe (A) de déplacement du capot mobile (9), disposées en regard de l'ouverture de passage de manière à ce que le flux secondaire (F) dévié passe, au moins en partie, au travers des première et seconde grilles (13, 131, 132) afin d'accentuer la déviation dudit flux secondaire (F) vers l'amont, lesdits moyens d'actionnement (45) et de guidage (24) du capot mobile (9) étant disposés entre les première et seconde grilles (13, 131, 132), **caractérisé en ce qu'**une paroi de recouvrement (31) relie lesdites première et seconde grilles (13, 131, 132), en contournant lesdits moyens d'actionnement (45) et de guidage (24).

2. Inverseur selon la revendication 1, **caractérisé en ce que** la paroi de recouvrement (31) est constituée, au moins en partie, d'une grille de déviation additionnelle (34), agencée pour accentuer la déviation dudit flux secondaire (F) vers l'amont.

3. Inverseur selon la revendication 2, **caractérisé en ce qu'**il comporte une paroi externe, une paroi interne destinée à délimiter une paroi périphérique d'un canal annulaire (6) dans lequel s'écoule le flux secondaire (F), les première et seconde grilles (131, 132) divergeant vers l'extérieur, de l'amont vers l'aval, la grille additionnelle (34) formant un angle avec lesdites première et seconde grilles (131, 132), de manière à former un décrochement externe par rapport à celles-ci.

4. Inverseur selon la revendication 3, **caractérisé en ce que** les première et seconde grilles forment un angle inférieur ou égal à 30 ° avec l'axe (A) de déplacement du capot mobile (9).

5. Inverseur selon l'une des revendications 2 à 4, **caractérisé en ce que** la grille additionnelle (34) est reliée à chacune des première et seconde grilles adjacentes (131, 132) par l'intermédiaire d'une paroi de liaison (38 , 39).

6. Inverseur selon la revendication 5, **caractérisé en ce que** la paroi de liaison (31) comporte une première face (40) reliée à l'une des première et seconde grilles (131, 132), respectivement à la grille additionnelle (34), et une seconde face (41) équipée de moyens de déflection (42) s'étendant depuis ladite seconde face (41) jusqu'au niveau de la grille additionnelle (34), respectivement jusqu'au niveau de la première ou seconde grille (131, 132).

7. Inverseur selon l'une des revendications 1 à 6, **caractérisé en ce que** le capot mobile (9) comporte au moins un logement (14) ouvert vers l'amont, dans lequel sont logées les première et seconde grilles (131, 132), en position de jet direct de l'inverseur.

8. Nacelle de turboréacteur à double flux, **caractérisée en ce qu'**elle comporte un inverseur de poussée selon l'une des revendications 1 à 7.

9. Nacelle selon la revendication 8, **caractérisée en ce qu'**elle comporte une structure interne (8), délimitant la paroi interne du canal annulaire (6) et présentant une zone d'élargissement (20), la paroi interne (16) du capot présentant une extrémité libre (43) disposée dans le prolongement ou à proximité de ladite zone d'élargissement (20), en position d'inversion de poussée.

10. Aéronef comportant au moins une nacelle selon la revendication 9.

## Patentansprüche

1. Schubumkehr für Gondel (1) eines Mantelstromtriebwerks, umfassend einen festen Teil (15), nachgelagert von dem mindestens eine Verkleidung (9) montiert ist, die zwischen einer direkten Jetposition, in der sich die Abdeckung (9) in der Verlängerung des festen Teils (15) befindet, und einer Position der Schubumkehr, in der die bewegliche Abdeckung (9) vom festen Teil (15) entfernt ist, beweglich ist, um eine Öffnung zum Durchgang eines sekundären Flusses (F) zu begrenzen, Mittel zur Umleitung (16) des sekundären Stroms (F) durch die Durchgangsöffnung, Mittel zur Betätigung (45) und zur Führung (24) der beweglichen Abdeckung (9) mit Bezug auf den festen Teil (15), mindestens ein erstes und ein zweites benachbartes Ablenkgitter (13, 131, 132), die schräg (B) mit Bezug auf die Achse (A) zur Verschiebung der beweglichen Abdeckung (9) ausgerichtet sind, derart gegenüber der Durchgangsöffnung angeordnet, dass der umgeleitete sekundäre Strom (F) mindestens teilweise durch das erste und das zweite Gitter (13, 131, 132) fließt, um die Ablenkung des sekundären Stroms (F) hin zur vorgelagerten Seite zu verstärken, wobei die Mittel zur Betätigung (45) und zur Führung (24) der beweglichen Abdeckung (9) zwischen dem ersten und dem zweiten Gitter (13, 131, 132) angeordnet sind, **dadurch gekennzeichnet, dass** eine Abdeckwand (31) das erste und das zweite Gitter (13, 131, 132) verbindet, in dem es die Mittel zur Betätigung (45) und zur Führung (24) umgeht.

2. Umkehr nach Anspruch 1, **dadurch gekennzeichnet, dass** die Abdeckwand (31) mindestens teilweise aus einem zusätzlichen Ablenkungsgitter (34) besteht, das angeordnet ist, um die Ablenkung des sekundären Stroms (F) hin zur vorgelagerten Seite zu verstärken.

3. Umkehr nach Anspruch 2, **dadurch gekennzeichnet, dass** sie eine externe Wand umfasst, eine interne Wand, die ausgelegt ist, um eine periphere Wand eines ringförmigen Kanals (6) zu begrenzen, in dem der sekundäre Strom (F) fließt, wobei das erste und das zweite Gitter (131, 132) nach außen, von der vorgelagerten Seite zur nachgelagerten Seite divergieren, wobei das zusätzliche Gitter (34) einen Winkel mit dem ersten und dem zweiten Gitter (131, 132) bildet, um eine externe Verschiebung mit Bezug auf diese zu bilden.

4. Umkehr nach Anspruch 3, **dadurch gekennzeichnet, dass** das erste und das zweite Gittereinen Winkel von weniger oder gleich 30 ° mit der Achse (A) zur Verschiebung der beweglichen Abdeckung (9) bilden.

5. Umkehr nach einem der Ansprüche 2 bis 4, **dadurch gekennzeichnet, dass** das zusätzliche Gitter (34) mit jedem des ersten und des zweiten benachbarten Gitter (131, 132) mit Hilfe einer Verbindungswand (38, 39) verbunden ist.

6. Umkehr nach Anspruch 5, **dadurch gekennzeichnet, dass** die Verbindungswand (31) eine erste Seite (40) umfasst, die mit einem des ersten Gitters und des zweiten Gitters (131, 132), bzw. dem zusätzlichen Gitter (34) verbunden ist, und eine zweite Seite (41), die mit Ablenkungsmitteln (42) ausgestattet ist, die sich von der zweiten Seite (41) bis auf die Ebene des zusätzlichen Gitters (34) bzw. bis auf die Ebene des ersten oder des zweiten Gitters (131, 132) erstrecken.

7. Umkehr nach einem der Ansprüche 1 bis 6, **dadurch gekennzeichnet, dass** die bewegliche Abdeckung (9) mindestens ein Lager (14) umfasst, das hin zur vorgelagerten Seite offen ist, in dem das erste und das zweite Gitter (131, 132) in einer direkten Jetposition der Umkehr angeordnet sind.

8. Gondel eines Mantelstromtriebwerks, **dadurch gekennzeichnet, dass** es eine Schubumkehr nach einem der Ansprüche 1 bis 7 umfasst.

9. Gondel nach Anspruch 8, **dadurch gekennzeichnet, dass** sie eine interne Struktur (8) umfasst, die die interne Wand des ringförmigen Kanals (6) begrenzt und einen Erweiterungsbereich (20) aufweist, wobei die interne Wand (16) der Abdeckung ein freies Ende (43) aufweist, das in der Verlängerung oder in der Nähe des Erweiterungsbereichs (20) in der Position der Schubumkehrung angeordnet ist.

10. Flugzeug, umfassend mindestens eine Gondel nach Anspruch 9.

## Claims

1. A thrust reverser for a turbofan engine nacelle (1) comprising a stationary portion (15) downstream from which is mounted at least one cowl (9) movable between a direct-jet position, in which the cowl (9) is aligned with the stationary portion (15), and a thrust-reversal position, in which the mobile cowl (9) is spaced apart from the stationary portion (15) so as to define an opening for the passage of a secondary flow (F), a means (16) for deflecting the secondary flow (F) through the passage opening, an actuator means (45) and a means (24) for guiding the mobile cowl (9) relative to the stationary portion (15), at least a first and a second adjacent cascade vane (13, 131, 132), positioned at an angle (B) relative to the movement axis (A) of the mobile cowl (9), arranged opposite the passage opening such that the deflected secondary flow (F) at least partially passes through the first and second vanes (13, 131, 132) in order to increase the deflection of said secondary flow (F) in the upstream direction, said actuator means (45) and means (24) for guiding the mobile cowl (9) being arranged between the first and second vanes (13, 131, 132), **characterized in that** a covering wall (31) connects said first and second vanes (13, 131, 132), bypassing said actuating means (45) and guide means (24).

2. The reverser according to claim 1, **characterized in that** the covering wall (31) is made up, at least in part, of an additional cascade vane (34), arranged to increase the deflection of said secondary flow (F) in the upstream direction.

3. The reverser according to claim 2, **characterized in that** it includes an outer wall, an inner wall intended to define a peripheral wall of an annular channel (6) in which the secondary flow (F) flows, the first and second vanes (131, 132) diverging outwardly, from upstream to downstream, the additional vane (34) forming an angle with said first and second vanes (131, 132), so as to form an outer recess relative thereto.

4. The reverser according to claim 3, **characterized in that** the first and second vanes form an angle smaller than or equal to 30° with the movement axis (A) of the mobile cowl (9).

5. The reverser according to one of claims 2 to 4, **characterized in that** the additional vane (34) is connected to each of the first and second adjacent vanes (131, 132) via a connecting wall (38, 39).

6. The reverser according to claim 5, **characterized in that** the connecting wall (31) includes a first surface (40) connected to one of the first and second vanes (131, 132), the additional vane (34), respectively, and a second surface (41) equipped with a deflecting means (42) extending from said second face (41) to the additional vane (34), the first or second vane (131, 132), respectively.

7. The reverser according to one of claims 1 to 6, **characterized in that** the mobile cowl (9) includes at least one housing (14) open in the upstream direction, in which the first and second vanes (131, 132) are housed, in the direct-jet position of the reverser.

8. A turbofan engine nacelle, **characterized in that** it includes a thrust reverser according one of claims 1 to 7.

9. The nacelle according to claim 8, **characterized in that** it includes an internal structure (8), defining the inner wall of the annular channel (6) and having a wider zone (20), the inner wall (16) of the cowl having a free end (43) aligned with or close to said wider zone (20), in the thrust-reversal position.

10. An aircraft including at least one nacelle according to claim 9.
